# EUROPEAN PATENT APPLICATION

(11) **EP 3 998 675 A1**
(43) Date of publication of application: **18.05.2022**
(21) Application number: 19936652.7
(22) Date of filing: 10.07.2019
(51) Int. Cl.: H01M 50/50, H01M 50/572

(54) **ELECTRICAL CONNECTION DEVICE FOR BATTERY MODULE**

(30) Priority: 09.07.2019 KR 20190082801
(71) Applicant: Korea Electric Terminal Co., Ltd., Incheon 21999 (KR)
(72) Inventor: BANG, Ji Woong, Bucheon-si, Gyeonggi-do 14504 (KR)
(74) Representative: Stöckeler, Ferdinand
(86) International application number: PCT/KR2019/008463
(87) International publication number: WO 2021/006383

(57) **Abstract**

An electrical connection device for a battery module is proposed. A plate seating part (12) is located on a frame (10) on which a busbar (32) and a substrate (30,30') are seated, and a tension plate (20) is seated on the plate seating part (12). Each of the opposite end parts of the tension plate (20) is coupled and fixed to the fixing part of a casing receiving a battery cell. The busbar (32) is seated on a busbar seating part (16) of the frame (10) and is coupled to the electrodes of the battery cell. In order to electrically connect the busbar (32) to the substrate (30,30'), a flexible flat cable (311), a connection metal plate (320), or a metal wire (330) is used.

## Description

### Technical Field

The present disclosure relates generally to an electrical connection device for a battery module. More particularly, the present disclosure relates to an electrical connection device for a battery module which is configured to connect the electrodes of battery cells constituting the battery module to each other.

### Background Art

A battery used in an electric vehicle is made in the form of a battery pack to be used. The battery pack includes multiple battery modules, and each of the battery modules is composed of battery cells for each of multiple unit battery modules. Accordingly, the purpose of making a battery pack for an electric vehicle is to ensure that sufficient power for driving the electric vehicle can be obtained and battery cells can be safely used.

When the battery module is configured, multiple battery cells are required to be connected electrically to each other. To this end, an electrical connection device for a battery module is used. In a battery module, multiple battery cells are generally connected in series to obtain a desired voltage. To this end, busbars are used to connect the electrodes of the battery cell to each other, and in a state in which these multiple busbars are mounted to the frame of an electrical connection device, the busbars are coupled to the electrodes of the battery cell.

A battery cell used in a battery module largely includes a can-type battery cell and a pouch-type battery cell, and these battery cells change in volume by being repeatedly charged and discharged. Accordingly, an electrical connection device installed on a surface of a battery module casing and busbars used herein are required to absorb the volume change of a battery cell due to the charging and discharging of the battery cell.

### Disclosure

### Technical Problem

The purpose of the present disclosure is to solve the above problems occurring in the prior art such that an electrical connection device used for a battery module can efficiently absorb the volume change of a battery cell due to the charging and discharging of the battery cell.

### Technical Solution

In order to accomplish the above objectives, according to an aspect of the present disclosure, an electrical connection device for a battery module of the present disclosure includes: a frame in which a plate seating part is formed by extending in a direction, a busbar seating part is formed along at least a side of the extending direction of the plate seating part, and a substrate seating part is formed to be adjacent to the busbar seating part, a tension plate being seated on and coupled to the plate seating part and being fixed to a fixing part of a casing receiving a battery cell at each of opposite end parts of the tension plate in a longitudinal direction thereof, the tension plate being capable of performing a predetermined amount of elastic transformation, a busbar being seated on the busbar seating part and being coupled to electrodes of the battery cell, a substrate being seated on the substrate seating part and being electrically connected to the busbar and to an external part, and a connection member being coupled to the substrate at a first end part thereof and coupled to the busbar at a second end part thereof so as to perform electrical connection therebetween, the connection member being transformed to enable a relative movement between the substrate and the busbar.

A plate body constituting a skeleton of the tension plate may have a shape of a thin band-shaped plate and is installed on the plate seating part such that the plate body is movable relative to the frame.

The plate body may be made of a metal material capable of being elastically transformed and may have multiple through holes formed therein in a longitudinal direction of the plate body.

A fixing end fixed to the casing may be formed on each of opposite end parts of the plate body.

As the connection member, a flexible flat cable or a flexible printed circuit board may be used.

The flexible flat cable or the flexible printed circuit board may include: a first coupling part coupled to the substrate, a second coupling part coupled to the busbar, and a connecting part configured to be curved at least one time between the first coupling part and the second coupling part and to connect the first coupling part to the second coupling part.

A connection metal plate made of metal may be used as the connection member and may include a first coupling part coupled to the substrate, a second coupling part coupled to the busbar, and a connecting part configured to be curved at least one time between the first coupling part and the second coupling part and to connect the first coupling part to the second coupling part.

A bent piece may be formed on the connecting part of the connection metal plate, the bent piece being bent to be orthogonal to other portions of the connecting part.

A protecting piece may be formed on the connecting part of the connection metal plate by bending therefrom.

The connection metal plate may be made of at least one of copper, brass, a copper alloy, nickel, and a nickel alloy.

A metal wire may be used as the connection member, wherein a first end part of the metal wire may be coupled to the substrate and a second end part of the metal wire may be coupled to the busbar.

The substrate and the busbar connected to each other by the metal wire may be adjacent to each other, wherein at least one of the substrate and the busbar may be formed by protruding.

A connecting finger may be formed on the busbar by protruding therefrom to be adjacent to the substrate, the connecting finger being configured to be curved at least one time.

### Advantageous Effects

The electrical connection device for a battery module of the present disclosure may have the following effects.

In the electrical connection device of the present disclosure, the tension plate may be coupled to a battery module casing at each of the opposite ends of a frame on which the busbar and the substrate are seated such that the frame is installed on the battery module. Accordingly, the frame may not be coupled directly to the battery module casing, but may be connected to the battery module casing through the tension plate such that the tension plate absorbs the volume change of a battery cell. Accordingly, the frame may freely absorb a movement of the busbar caused by the volume change of the battery cell due to the direct connection of the busbar installed on the frame with the electrodes of the battery cell, thereby minimizing impact due to the volume change of the battery cell.

In addition, in the electrical connection device of the present disclosure, the connection member which can elastically transform may be used to connect the substrate to the busbar. Accordingly, the relative movement of each of the substrate and the busbar to each other may be absorbed such that the coupled state of the busbar to the electrodes of the battery cell, the coupled state of the substrate to the connection member, and the coupled state of the busbar to the connection member may be prevented from deteriorating, thereby significantly increasing the durability of the electrical connection device.

### Description of Drawings

FIG. 1 is a perspective view illustrating an exemplary embodiment of an electrical connection device of the present disclosure.
FIG. 2 is an exploded perspective view illustrating the configuration of the electrical connection device illustrated in FIG. 1 according to the embodiment.
FIG. 3 is an exploded perspective view illustrating the configuration of a frame constituting the electrical connection device according to the embodiment of the present disclosure.

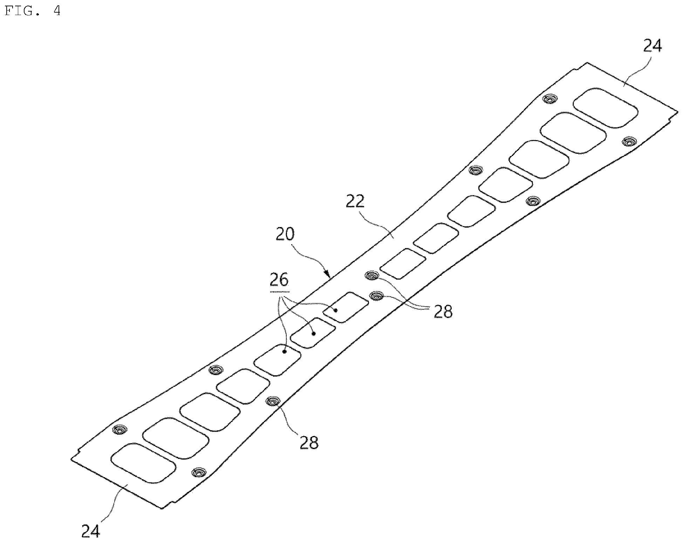

FIG. 4 is a perspective view illustrating the configuration of a tension plate constituting the electrical connection device according to the embodiment of the present disclosure.
FIG. 5 is a perspective view illustrating an example in which the substrate is connected to the busbar by using a flexible flat cable in the present disclosure.
FIG. 6 is a perspective view illustrating an example in which the substrate is connected to the busbar by using a connection metal plate in the present disclosure.
FIG. 7 is a perspective view illustrating an example in which the substrate is connected to the busbar by using a metal wire in the present disclosure.
FIG. 8 is a perspective view illustrating the busbar constituting the electrical connection device of the present disclosure according to the embodiment.
FIG. 9 is a perspective view illustrating a coupling bracket constituting the electrical connection device of the present disclosure according to the embodiment.
FIG. 10 is a perspective view illustrating approximately that the electrical connection device is mounted to battery module casings according to the embodiment of the present disclosure.

### Mode for Invention

Hereinafter, an embodiment of the electrical connection device of the present disclosure will be described in detail with reference to the accompanying drawings. In adding reference numerals to components of each drawing, it should be noted that the same components are given the same reference numerals as much as possible even though the components are indicated on different drawings. In addition, in describing the embodiment of the present disclosure, when it is determined that a detailed description of a related known configuration or function interferes with the understanding of the embodiment of the present disclosure, the detailed description thereof will be omitted.

In addition, in describing the components of the electrical connection device of the present disclosure, terms such as first, second, A, B, (a), and (b) may be used. These terms are only for distinguishing a component from other components, and the essence or order of the component is not limited to the terms. When it is described that a component is "connected to", "coupled to", or "in contact with" another component, the component may be directly connected to or in contact with the another component, but it should be understood that a component may be "connected to", "coupled to", or "in contact with" still another component between each of the components.

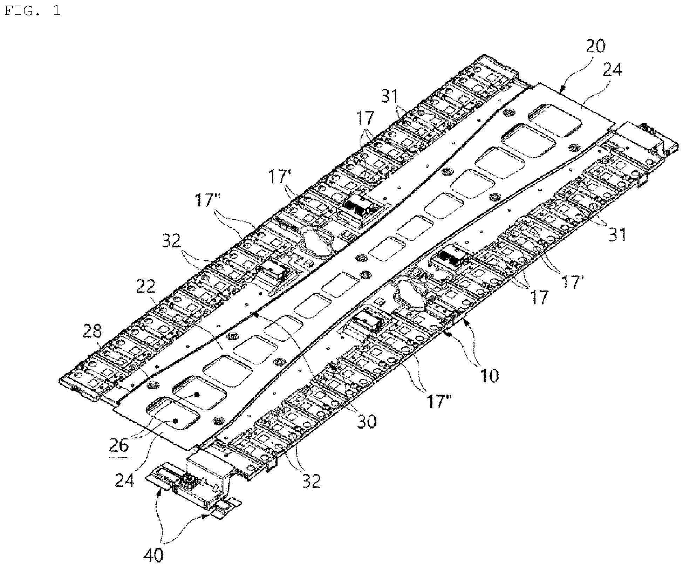

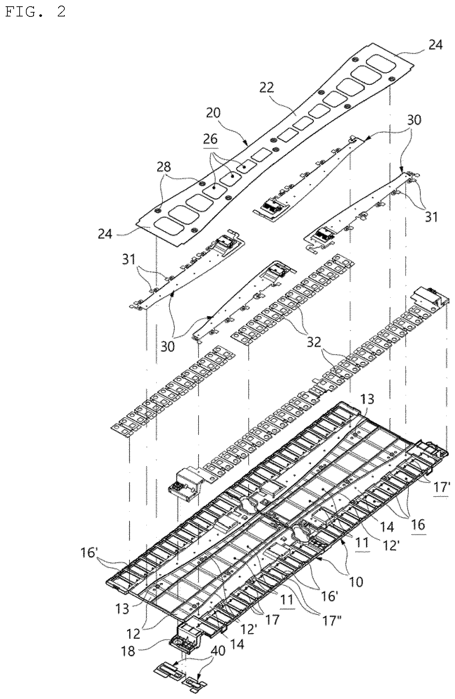

As illustrated in FIGS. 1 and 2, an electrical connection device for a battery module according to the embodiment of the present disclosure may include a frame 10, a tension plate 20, a substrate 30, and a busbar 32. The frame 10 may be a part in which the tension plate 20, the substrate 30, and the busbar 32 are installed. The entirety of the frame 10 may be made integrally. However, in this embodiment, the frame 10 is divided into two pieces.

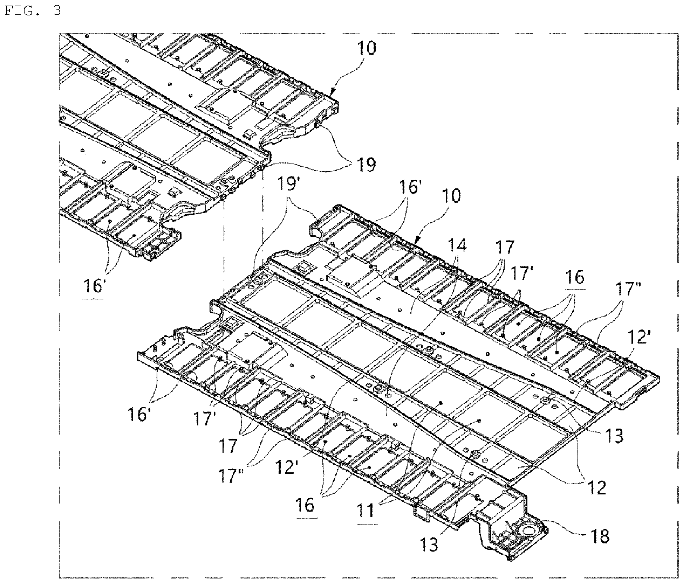

As illustrated in FIG. 3, the frame 10 is arranged in a longitudinal direction and is divided into two pieces. However, according to the specification of the electrical connection device, the frame 10 may be integrated as a whole. Multiple vent holes 11 may be formed in the center of the width direction of the frame 10 such that the vent holes are arranged to be long in the longitudinal direction of the frame. In the embodiment, each of the multiple vent holes 11 has a square shape and is configured in a row. Gas from the battery cell may be discharged through the vent holes 11 to the outside.

A portion extending along the longitudinal direction of the frame 10 in which the vent hole 11 is formed may be a plate seating part 12. The tension plate 20 may be seated on the plate seating part 12 and may be coupled to the frame 10. The plate seating part 12 and a part may be separated from each other by a first partition wall 12'. In the embodiment, in order to separate the plate seating part 12 from a substrate seating part 14 to be described later, the first partition wall 12' may be used. The first partition wall 12' may protrude by a predetermined height on a surface of the frame 10. The first partition wall 12' may be made and extended in a shape corresponding to the edge shape of the tension plate 20.

The plate seating part 12 may have multiple coupling protrusions 13. The plate seating part 12 may be coupled to the tension plate 20 by welding each of the coupling protrusions 13. Of course, the coupling protrusions 13 may not be required to be used such that the plate seating part 12 is coupled to the tension plate 20, but instead of the coupling protrusions 13, screws may be used.

The substrate seating part 14 may be configured to be adjacent to the plate seating part 12. The substrate seating part 14 may be partitioned from the plate seating part 12 by the first partition wall 12' and may be partitioned from a busbar seating part 16 by a portion of a second partition wall 17 to be described later. The substrate 30 may be seated on the substrate seating part 14.

There may be the busbar seating part 16 along the edge of the width direction of the frame 10. The busbar seating part 16 may be partitioned from the substrate seating part 14 by a portion of the second partition wall 17. A portion of the second partition wall 17 may be formed intermittently for electrical connection between the substrate 30 and the busbar 32. That is, the substrate 30 may be electrically connected to the busbar 32 through a portion at which the second partition wall 17 is not formed. The busbar 32 may be mounted to the busbar seating part 16, and the busbar seating part 16 may have a contact opening 16' formed in a row therein so as to be coupled to the electrodes of a battery cell. The contact opening 16' may be formed through the frame 10. The second partition wall 17 may function to partition the busbar seating part 16 from the substrate seating part 14, and may function to separate the busbars 32 from each other.

A connector mounting part 18 may be formed integrally on one end part of the frame 10. The connector mounting part 18 may protrude from one edge of the frame 10. A connector (not shown) to which a mating connector provided for a configuration for electrical connection between battery modules is coupled may be located in the connector mounting part 18. The connector mounting part 18 may be configured to be stepped such that the connector mounting part 18 is located at a position lower than the surface of the frame 10 on which busbars 32 are located. This is intended such that the connector mounted to the connector mounting part 18 does not protrude beyond a predetermined height. Reference numeral 17' is a fusion protrusion formed on the busbar seating part 16. The fusion protrusion 17' is intended to be coupled to the busbar 32. The frame 10 may have a holding part 17", which may function to hold an end part of the busbar 32 to the frame 10. The holding part 17" may have an end protruding in a straight line during the formation of the frame 10, but the end of the holding part may be bent by heat such that the busbar 32 can be held thereby.

Meanwhile, in the illustrated embodiment, the frame 10 is divided into two parts. Most components of these two parts may be configured similarly to each other except for some components thereof. In order to connect these two frames 10 to each other, a hooking protrusion 19 may be formed on a frame 10 at a first side by protruding therefrom, and a hooking recess 19' may be formed in a frame 10 at a second side, the hooking recess being located at a position corresponding to the hooking protrusion. The hooking protrusion 19 may have an L shape and may be hooked into the hooking recess 19' having a shape corresponding to the shape of the hooking protrusion. Due to such a structure, the frames 10 located at the opposite sides may not be arbitrarily separated from each other in the longitudinal direction of the frames 10. As illustrated in FIG. 3, the hooking protrusion 19 may be removed from the hooking recess 19' in a direction of a surface of the frame 10, but the hooking recess 19' is designed to have a predetermined depth or more, and thus the hooking protrusion 19 may not be arbitrarily separated from the hooking recess 19' in the direction of the surface of the frame 10 during the use of the frames. The hooking protrusion 19 and the hooking recess 19' may include multiple hooking protrusions and hooking recesses as much as the number corresponding to each other. The heights of the hooking protrusions 19 may be different from each other.

The tension plate 20 may be made of a material that can be elastically transformed. The tension plate 20 is preferably made of metal. The tension plate 20 may be made to have a shape of a thin plate. The dimensions of the tension plate 20 such as thickness may be preset such that the tension plate 20 sufficiently supports the weight of the frame 10 and parts mounted thereto and absorbs the movement of the associated parts due to the volume change of a battery cell.

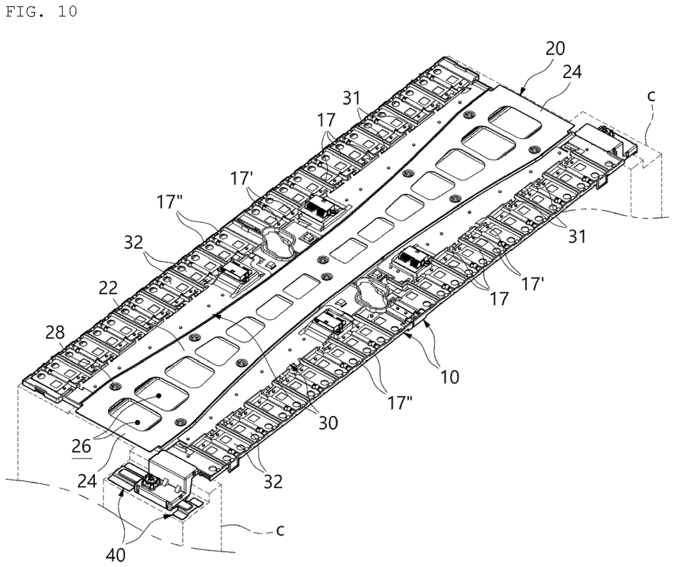

A plate body 22 may constitute the skeleton of the tension plate 20. The plate body 22 may have a shape of a band-shaped plate, and in the illustrated embodiment, has a small width in a middle portion of the longitudinal direction of the plate body 22 and has a relatively large width in each of the opposite end portions thereof. As illustrated in FIG. 10, each of the opposite end parts of the plate body 22 is a fixing end 24 coupled to a battery module casing C or a member fixed to the casing C. In the embodiment, the fixing end 24 may be coupled to the battery module casing C by welding.

The plate body 22 may have multiple through holes 26 formed therein in a row in the longitudinal direction of the plate body. Each of the through holes 26 is a part through which gas coming out through the vent hole 11 of the frame 10 is discharged to the outside. The area of the through hole 26 may be changed according to the width of the plate body 22. At a position at which the width of the plate body 22 is narrow, the length of the longitudinal direction of the plate body may be longer than the length of the width direction of the plate body.

The plate body 22 may have a coupling through hole 28 formed in the form of a through hole. The coupling through hole 28 is intended to couple the plate body 22 to the frame 10. The coupling through hole 28 may be configured to have a diameter larger than the diameter of the coupling protrusion 13 formed in the frame 10. The coupling through hole 28 may be configured to have an inner diameter larger than the diameter of the coupling protrusion 13 in a direction of the relative movement of each of the tension plate 20 and the frame 10 to each other caused by the volume change of the battery cell. The coupling through hole 28 may be made to have the shape of a long hole such that the long axis of the coupling through hole 28 extends in the longitudinal direction of the plate body 22.

The substrate 30 may be a part provided with circuits and elements necessary for the operation of the electrical connection device of the present disclosure. A flexible printed circuit board may be used as the substrate 30. In FIGS. 1 and 2, the flexible printed circuit board is illustrated to be used as the substrate 30. In order to electrically connect the substrate 30 to the busbar 32, a connection member 31 may be provided. In the embodiment illustrated in FIGS. 1 and 2, the connection member 31 is provided to be integrated with the substrate 30. That is, the connection member 31 may be provided as a part of the flexible printed circuit board which is the substrate 30 and may electrically connect the substrate 30 to the busbar 32.

Meanwhile, a rigid substrate may be used as the substrate 30. When a rigid substrate is used as the substrate 30, a separate connection member is required to electrically connect the rigid substrate to the busbar 32. This is intended to prevent the connection of the substrate 30 to the busbar 32 without the relative movement of each of the substrate 30 and the busbar 32 to each other. When a flexible printed circuit board is used as the substrate 30, the substrate 30 and the busbar 32 may move relative to each other due to the elastic transformation of the connection member 31 of the flexible printed circuit board. However, when a rigid substrate is used as the substrate 30', various components may be used to connect the substrate 30' to the busbar 32.

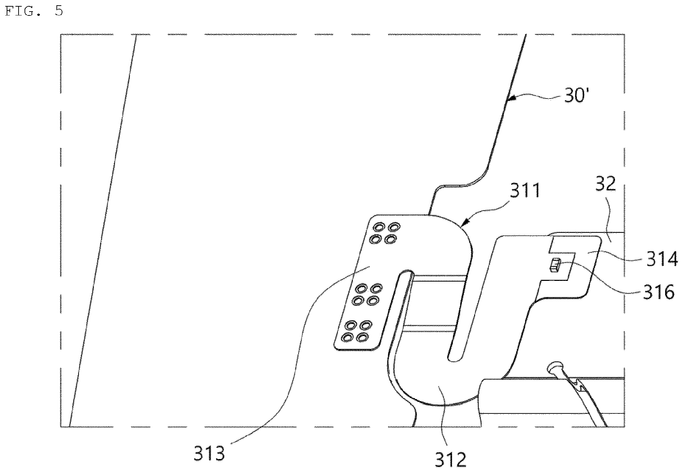

First, as illustrated in FIG. 5, the substrate 30' may be connected to the busbar 32 by using a flexible flat cable 311 (FFC). The flexible flat cable 311 may be made to have a predetermined shape and may connect the rigid substrate 30' to the busbar 32. In the flexible flat cable 311, a first coupling part 313 may be provided on a first end part of a connecting part 312 so as to be electrically connected to the substrate 30', and a second coupling part 314 may be provided on a second end part of the connecting part 312 so as to be electrically connected to the busbar 32. The connecting part 312 may have a predetermined length or more such that even if the relative change of a position of each of the substrate 30' and the busbar 32 occurs, the relative change can be absorbed. In the embodiment, after the connecting part 312 extends in a direction from the first coupling part 313, the connecting part 312 may bend about 90 degrees to extend and may again bend to extend in the opposite direction. The connecting part 312 may be made to have various shapes in addition to the shape of the connecting part 312 in the illustrated embodiment. That is, the connecting part 312 may be made to be curved at least one time without connecting the first coupling part 313 to the second coupling part in a straight line such that the relative movement of each of the substrate 30' and the busbar 32 to each other can be performed.

The first coupling part 313 may be coupled to the substrate 30' by soldering, and the second coupling part 314 may be coupled to the busbar 32 by welding. The first coupling part 313 and the second coupling part 314 may be made to have predetermined areas or more so as to be coupled respectively to the substrate 30' and the busbar 32.

Meanwhile, the flexible printed circuit board (FPCB) similar to the flexible flat cable of the embodiment illustrated in FIG. 5 may be used. When the flexible printed circuit board is used, an element 316 such as a temperature sensor may be mounted on the flexible printed circuit board.

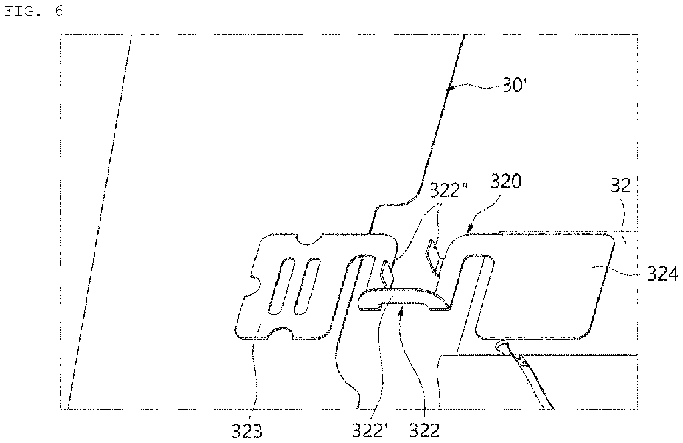

In FIG. 6, another example in which the substrate 30' is connected to the busbar 32 is illustrated. Here, the substrate 30' is connected to the busbar 32 by using a connection metal plate 320. The connection metal plate 320 is made of a metal plate with high conductivity. For example, the connection metal plate 320 is made of at least one of copper, brass, a copper alloy, nickel, and a nickel alloy.

The connection metal plate 320 may have a connecting part 322. The connecting part 322 may be elastically transformed to some degree due to the characteristic of a shape thereof. The connecting part 322 may be elastically transformed in shape and may enable a relative movement of each of a first coupling part 323 and a second coupling part 324 to each other to be described later. The connecting part 322 may be made to bend at least one time without connecting the first coupling part 323 to the second coupling part 324 in a straight line such that the relative movement can be performed.

The connecting part 322 may have a bent piece 322' . The bent piece 322' may be formed on the center portion of the connecting part 322. The bent piece 322' may be bent to be orthogonal to other portions of the connecting part 322, and may absorb a relative movement of each of the substrate 30' and the busbar 32 to each other occurring in any direction of three-dimensional directions. This is intended such that since the connection metal plate 320 is made of one metal plate, the bent piece 322' is provided to add a direction of a relative movement of each of the first coupling part 323 and the second coupling part 324 to each other. The connecting part 322 may also have a protecting piece 322". In this embodiment, two protecting pieces 322" are provided to protect the connecting part 322. The protecting piece 322" may function to reinforce the connecting part 322 and to prevent an external force from being applied directly to the connecting part 322. In the illustrated embodiment, the two protecting pieces 322" are provided, and the number of the protecting pieces 322" may be changed according to the length and shape of the connecting part 322.

The first coupling part 323 may be located on an end portion of the connecting part 322. The first coupling part 323 may be coupled to the substrate 30 by soldering. The first coupling part 323 may be electrically connected to the substrate 30'. The second coupling part 324 may be located on the opposite side of the first coupling part 323 and may be electrically connected to the busbar 32. The second coupling part 324 may be coupled to the busbar 32 by welding. The first coupling part 323 and the second coupling part 324 may be made to have predetermined areas or more so as to be coupled respectively to the substrate 30' and the busbar 32.

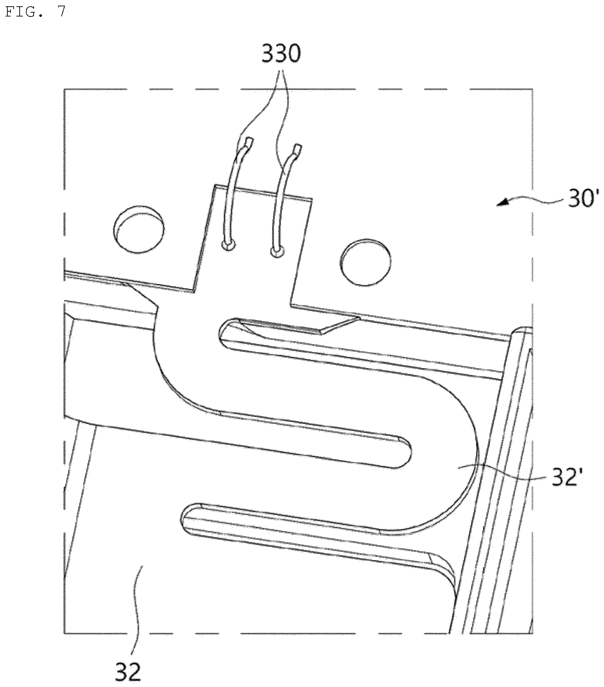

Next, in FIG. 7, an example in which the substrate 30' is connected to the busbar 32 by using a metal wire 330 is illustrated. The wire 330 may be made of metal with high electrical conductivity. For example, the wire 330 may use a wire made of at least one of gold, silver, copper, brass, nickel, and an alloy thereof. A first end portion of the wire 330 may be soldered to a land of the substrate 30', and a second end portion of the wire 330 may be coupled to the busbar 32 by welding.

In this case, in order to minimize the length of the wire 330, the substrate 30' is required to be adjacent to the busbar 32. To this end, a portion of the substrate 30' may protrude such that the substrate 30' is adjacent to the busbar 32, or a portion of the busbar 32 may protrude such that the substrate 30' is adjacent to the busbar 32. In FIG. 7, a connecting finger 32' protrudes on a side of the busbar 32 to be adjacent to the substrate 30', and the opposite end portions of the wire 330 may be coupled to the connecting finger 32' and the substrate 30', respectively. Although the wire 330 may be elastically transformed in three-dimensional directions, the connecting finger 32' may be configured to be curved such that relative movements of the associated parts in at least two directions can be performed. To this end, as illustrated in the drawing, the connecting finger 32' may be formed to be curved.

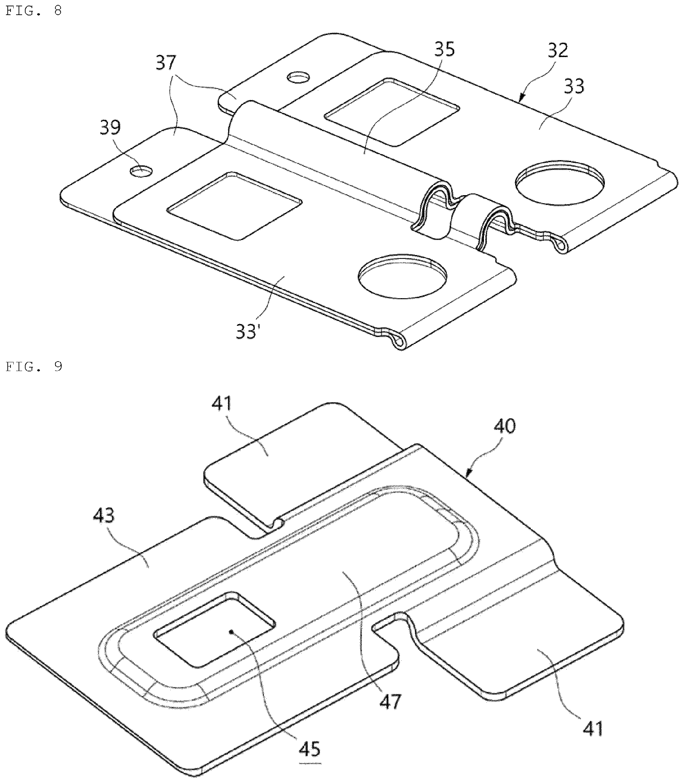

The busbar 32 may be made of conductive metal. The busbar 32 is preferably made of the same material as the electrodes of a battery cell. As an example of a material of which the busbar 32 is made, there is aluminum. The busbar 32 may be coupled to the electrodes (not shown) of a battery cell to be electrically connected thereto, and may be electrically connected even to the substrate 30'. As illustrated in FIG. 8, in the busbar 32, a first connection part 33 coupled to the electrodes of one battery cell and a second connection part 33' coupled to the electrodes of an adjacent battery cell may be connected to each other by a connecting bridge 35. In the embodiment, the connecting bridge 35 may have an arch shape, and the first connection part 33 and the second connection part 33' may absorb a movement caused by the volume changes of the battery cells and a relative movement due to a stress caused by welding.

A substrate coupling part 37 may be located on an end portion of each of the first connection part 33 and the second connection part 33'. A side of the substrate 30 may be electrically and physically connected to the substrate coupling part 37. A through hole while is a frame coupling part 39 may be formed in the substrate coupling part 37. With the fusion protrusion 17' passing through the frame coupling part 39, the fusion protrusion 17' may be welded to the busbar 32, and the holding part 17" may be held by an end portion of the busbar 32 of a side opposite to the welded portion such that the busbar 32 and the frame 10 are coupled to each other. The state in which the busbar 32 is mounted to the frame 10 is not a state in which the movement of the busbar 32 is impossible. The inner diameter of the frame coupling part 39 may be slightly larger than the diameter of the fusion protrusion 17', and the holding part 17" may not be in close contact with the surface of the busbar 32, so the busbar 32 may move relative to the frame 10.

Meanwhile, in order to reinforce the rigidity of the connector mounting part 18, a coupling bracket 40 may be used. The coupling bracket 40 may be fitted into and coupled to each of the opposite ends of the connector mounting part 18 and may be coupled to the battery module casing C to which the fixing end 24 of the tension plate 20 is coupled. The coupling bracket 40 may be made of metal, and may include a fixing part 41 fixed to the casing C, and an insertion coupling part 43 inserted into a position between rails (not shown) of the connector mounting part 18 by extending from the fixing part 41. A holding hole 45 in which a holding jaw (not shown) located on the connector mounting part 18 is held may be formed in the insertion coupling part 43. Reference numeral 47 refers to a reinforcing bead and may function to reinforce the rigidity of the fixing part 41 and the insertion coupling part 43.

The installation and use of the electrical connection device for a battery module having the configuration described above according to the present disclosure will be described in detail.

First, the assembly of the electrical connection device of the present disclosure according to the embodiment will be described. The tension plate 20 may be seated on the plate seating part 12 of the frame 10. The coupling protrusion 13 may pass through the coupling through hole 28 of the tension plate 20 to be coupled to each other by ultrasonic fusion. In this case, there may be a predetermined gap between the coupling protrusion 13 and the coupling through hole 28, so a relative movement of each of the tension plate 20 and the frame 10 to each other may be performed.

Each of the substrates 30 and 30' may be seated on and fixed to the substrate seating part 14, and busbars 32 may be seated on the busbar seating part 16. The busbars 32 may be coupled to the frame 10 by ultrasonic fusion of the fusion protrusion 17' and the holding part 17".

The frame 10 in this state may be seated on the surface of the battery module casing C, and the first connection part 33 and the second connection part 33' of each of the busbars 32 may be located respectively at positions corresponding to the electrodes of a battery cell. Furthermore, the fixing end 24 of the tension plate 20 may be coupled to the battery module casing C. This coupling may be performed in various manners. The fixing end 24 may be coupled to the casing C in various manners such as welding, screwing, or riveting. Additionally, the busbars 32 may be laser welded to electrodes of multiple battery cells arranged inside the battery module casing C to be electrically connected to each other.

The frame 10 may not be coupled directly to the battery module casing C or battery cells. That is, the busbars 32 seated on the frame 10 may be coupled to the electrodes of the battery cells, so the frame 10 may be maintained to be seated on the battery cells.

Meanwhile, in order to couple the connector mounting part 18 to the battery module casing C, the coupling bracket 40 may be used. As for the coupling bracket 40, the insertion coupling part 43 may be inserted into a position between the rails of the connector mounting part 18 therealong at each of the opposite ends of the connector mounting part 18, the holding jaw may be held in the holding hole 45, and the fixing part 41 may be coupled to the battery module casing C such that the connector mounting part 18 is fixed securely to the battery module casing C.

In a battery pack made in this manner may have the volume change of battery cells during use. When the battery cells swell, the battery module casing C may change in dimension and thus the tension plate 20 may be transformed. At the same time, the busbars 32 connected to the electrodes of the battery cells may be moved. Since the tension plate 20 can perform a predetermined amount of elastic transformation, the tension plate 20 may absorb the movement of the busbars, and the movement of the busbars 32 may also be absorbed by the connecting bridge 35. Of course, the busbars 32 may move to some degree relative to the frame 10.

In addition, when a rigid printed circuit board is used as the substrate 30', as the connection member which connects the substrate 30' to the busbar 32, the flexible flat cable, the flexible printed circuit board 310, the connection metal plate 320, and the wire 330 may absorb a relative change of a distance between the busbar 32 and the substrate 30'.

Accordingly, the relative movement of each of parts constituting the electrical connection device caused by the charging/discharging of a battery cell may not affect the coupled states of other coupled parts including the coupled part of the busbar 32 to the electrodes of the battery cell.

In the above, although all components constituting the electrical connection device of the present disclosure according to the embodiment are described as being combined integrally or as being operated in combination with each other, the present disclosure is not necessarily limited to this embodiment. That is, within the scope of the objective of the present disclosure, at least two components of all the components may operate by being selectively combined with each other. In addition, terms such as "includes", "composed of" or "have" described above mean that the corresponding components may be inherent, unless otherwise specified, so the terms should be construed as being able to further include other components instead of excluding other components. All terms, including technical and scientific terms, have the same meaning as commonly understood by those skilled in the art to which the present disclosure belongs, unless otherwise defined. Terms commonly used, such as terms defined in a dictionary, should be interpreted as being consistent with the contextual meaning of the related art, and are not interpreted as ideal meanings or excessively formal meanings unless explicitly defined in the present disclosure.

The above description is merely illustrative of the technical idea of the present disclosure, and those skilled in the art to which the present disclosure pertains may make various modifications and variations without departing from the essential characteristics of the present disclosure. Accordingly, the embodiment disclosed in the present disclosure is for explaining rather than limiting the technical spirit of the present disclosure, and the scope of the technical spirit of the present disclosure is not limited by the embodiment. The protection scope of the present disclosure should be construed by the following claims, and all technical ideas within the scope equivalent thereto should be construed as being included in the scope of the present disclosure.

In the illustrated embodiment, the configuration related to the tension plate 20 and the configuration related to the coupling bracket 40 are all applied, but these configurations may be applied separately from each other. That is, only the configuration related to the tension plate 20 may be applied and the configuration related to the coupling bracket 40 may not be applied, or only the configuration related to the coupling bracket 40 may be applied and the configuration related to the tension plate 20 may not be applied.

In the illustrated embodiment, the busbar seating part 16 is located at each of the opposite ends of the frame 10 in a width direction thereof, but this is not necessarily the case. That is, the busbar seating part 16 may be configured along only an end portion of the frame 10 in the width direction thereof.

In the illustrated embodiment, the relative movement of each of the frame 10 and the tension plate 20 to each other, the relative movement of each of the busbar 32 and the substrate 30 or 30' to each other, and the relative movement of each of the busbar 32 and the frame 10 to each other are described to be performed. However, all of these relative movements are not required to be performed, but a necessary relative movement is only the relative movement of each of the substrate 30 or 30' and the busbar 32 to each other.

## Claims

1. An electrical connection device for a battery module, the device comprising:
a frame in which a plate seating part is formed by extending in a direction, a busbar seating part is formed along at least a side of the extending direction of the plate seating part, and a substrate seating part is formed to be adjacent to the busbar seating part,
a tension plate being seated on and coupled to the plate seating part and being fixed to a fixing part of a casing receiving a battery cell at each of opposite end parts of the tension plate in a longitudinal direction thereof, the tension plate being capable of performing a predetermined amount of elastic transformation,
a busbar being seated on the busbar seating part and being coupled to electrodes of the battery cell,
a substrate being seated on the substrate seating part and being electrically connected to the busbar and to an external part, and
a connection member being coupled to the substrate at a first end part thereof and coupled to the busbar at a second end part thereof so as to perform electrical connection therebetween, the connection member being transformed to enable a relative movement between the substrate and the busbar.

2. The device of claim 1, wherein a plate body constituting a skeleton of the tension plate has a shape of a thin band-shaped plate and is installed on the plate seating part such that the plate body is movable relative to the frame.

3. The device of claim 2, wherein the plate body is made of a metal material capable of being elastically transformed and has multiple through holes formed therein in a longitudinal direction of the plate body.

4. The device of claim 3, wherein a fixing end fixed to the casing is formed on each of opposite end parts of the plate body.

5. The device of any one of claims 1 to 4, wherein as the connection member, a flexible flat cable or a flexible printed circuit board is used.

6. The device of claim 5, wherein the flexible flat cable or the flexible printed circuit board comprises: a first coupling part coupled to the substrate, a second coupling part coupled to the busbar, and a connecting part configured to be curved at least one time between the first coupling part and the second coupling part and to connect the first coupling part to the second coupling part.

7. The device of any one of claims 1 to 4, wherein a connection metal plate made of metal is used as the connection member and comprises a first coupling part coupled to the substrate, a second coupling part coupled to the busbar, and a connecting part configured to be curved at least one time between the first coupling part and the second coupling part and to connect the first coupling part to the second coupling part.

8. The device of claim 7, wherein a bent piece is formed on the connecting part of the connection metal plate, the bent piece being bent to be orthogonal to other portions of the connecting part.

9. The device of claim 8, wherein a protecting piece is formed on the connecting part of the connection metal plate by bending therefrom.

10. The device of claim 9, wherein the connection metal plate is made of at least one of copper, brass, a copper alloy, nickel, and a nickel alloy.

11. The device of any one of claims 1 to 4, wherein a metal wire is used as the connection member, wherein a first end part of the metal wire is coupled to the substrate and a second end part of the metal wire is coupled to the busbar.

12. The device of claim 11, wherein the substrate and the busbar connected to each other by the metal wire are adjacent to each other, wherein at least one of the substrate and the busbar is formed by protruding.

13. The device of claim 12, wherein a connecting finger is formed on the busbar by protruding therefrom to be adjacent to the substrate, the connecting finger being configured to be curved at least one time.
